# EUROPEAN PATENT SPECIFICATION

(11) **EP 4 459 136 B1**
(45) Date of publication and mention of the grant of the patent: **01.07.2026**
(21) Application number: 23171874.3
(22) Date of filing: 05.05.2023
(51) Int. Cl.: F16B 5/02, F16B 7/06, F16B 31/04, F16B 35/04

(54) **TENSIONER DEVICE**
SPANNVORRICHTUNG
DISPOSITIF TENDEUR

(43) Date of publication of application: 06.11.2024
(60) Divisional application: 26166059.1
(73) Proprietor: Hitachi Energy Ltd, 8050 Zürich (CH)
(72) Inventor: Andersson, Olov, 77134 Ludvika (SE); Ortenmark, Patrik, 73197 Köping (SE)
(74) Representative: AWA Sweden AB

(56) References cited:
- FR-A1- 2 668 558
- KR-B1- 102 431 360
- US-A- 2 678 226

## Description

### Technical Field

The present invention relates to structures for supporting converter valve assemblies, for example in high power systems. More particularly, the present invention relates to a tensioner device for tensioning a composite rod that reinforces such structures.

### Background

High power systems comprise converters, the hardware of which (i.e. a set of converter valves) is often arranged in a standing structure. Such standing structures may be placed in spaces that are volumetrically limited and may suffer from frequent seismic activity or other such disturbances, such as on offshore wind farm installations.

Accordingly, standing structures for converter valve assemblies often require a great amount of structural resilience. While similar structures may exploit high tensile strength materials such as metals, a particular consideration in the context of converter valve assemblies is the need for electrical insulation from the converter valves.

Hence, it is known to use composite rods, which are not electrically conductive, to reinforce such structures. In practice, a composite rod may be attached between two sections of a standing structure and tensioned to thereby reinforce the connection between said two sections. This is particularly advantageous when torsional forces are expected between said two sections.

Known means for tensioning composite rods include hydraulic tensioners and turnbuckles. However, there exists a desire to improve means for tensioning composite rods.

US2678226A discloses a turnbuckle comprising a sleeve having its ends internally threaded in opposite directions and externally threaded in opposite directions.

### Summary

It is realized as a part of the present disclosure that composite rods are increasingly being installed into structures such that there is very limited space around the composite rods. Accordingly, in order to allow for a tensioning of composite rods in a compact space, a more compact tensioner device is required.

Thus, according to an aspect of the present disclosure, there is provided a tensioner device for tensioning a composite rod, wherein the tensioner device is configured for arranging radially around the composite rod between a first anchor point of the composite rod and a first pushing surface arranged between the first anchor point and a second anchor point of the composite rod.

That is, the composite rod extends along a length axis, and the composite rod may have integrated or added anchor points at two different sections thereof, e.g., at either end of the composite rod. For example, the composite rod may be threaded at each end and may have a nut affixed at each end, such that the nut presents a surface for pushing against that is fixed relative to the composite rode, referred to herein as an anchor point. In another example, an anchor point may be integrally molded onto an end or intermediate section of the composite rod, depending on the particular implementation.

The pushing surface is a surface that is separate to the composite rod, such as a surface on a structure which the composite rod is being used to reinforce. That is, the pushing surface is moveable relative to the composite rod. In an example, an end of composite rod may extend through an opening in a bracket, said end comprising an anchor point. The bracket may then form a first pushing surface such that pressure applied between the bracket and the anchor point (i.e., by the tensioning device) tensions the composite rod.

The tensioner device is thus configured to tension the composite rod by applying pressure between the first anchor point and the first pushing surface. In use, the tensioning device may substantially surround the composite rod, e.g., being threaded onto the composite rod, so as to be arranged radially around the composite rod, between the first anchor point and the first pushing surface. In contrast to prior art devices, the presently disclosed tensioning device is configured to remain in place around the composite rod, rather than being removed after tension has been applied. Hence, the tensioning device may be easily re-tensioned regularly as part of a routine maintenance program.

The pressure applied by the tensioning device may take the form of a pushing, e.g., such that a top surface and a bottom surface of the tensioning device push outwards away from each other. However, it will be appreciated that the presently disclosed tensioning device may be adapted to tension the composite rod by applying a pulling force instead, if the surrounding structure is adapted accordingly.

The tensioner device comprises a first part for abutting the first anchor point, a second part for abutting the first pushing surface; and a third part arranged between the first part and the second part. Hence, an assembled tensioner device arranged in use around a composite rod will have axially outermost surfaces formed by the first and second parts, which abut and push against the first anchor point and the first pushing surface, respectively.

The third part engages at least one of the first part and the second part so as to translate a rotational motion of said third part into a linear motion of said at least one of the first part and the second part away from the third part, to thereby apply the pressure between the first anchor point and the first pushing surface.

By turning the third part, the first and the second part will extend axially along the rod, pushing against the first anchor point and the first pushing surface. For example, the third part may engage one of the first or second parts, or both, by having a threaded inner surface and the first and/or second parts having a threaded outer surface. Such threaded surfaces may thus enable a translation of a rotational motion of the third part into a linear motion of the first and/or second parts.

The third part preferably does not, in use, contact the first anchor point or the first pushing surface directly so as not to apply undesirable friction thereagainst - hence, the third part can be allowed to be rotated without undue resistance.

In an example where only, e.g., the first part is engaged by the third part, the second part may be configured to allow for the rotation of the third part in a substantially unencumbered fashion. For example, the second part and the third part may be coupled by a low-friction rotational bearing. In such an example, the second part will not move linearly away from the third part upon a rotation of the latter.

In an example configuration of a tensioner device, the first part and/or the second part may be formed as a hollow bolt having a shaft section and a flange section, and the third part may be formed as a nut having a radially inner surface engaging, via threads, the radially outer surface of the shaft section of said hollow bolt. As used here, a 'hollow bolt' may be a bolt or bolt-like component having a recess or through-hole along the axis thereof (e.g., through the center of the rotational axis of the bolt).

The flange section may extend radially outwards from an end of the shaft section so as to form a surface for pushing or otherwise applying pressure to an anchor point or pushing surface. The construction of the bolts, and in particular the flange section thereof, may preferably be of a material that is able to withstand the expected pressure applied thereto. For example, the bolt(s) may be entirely formed of a resilient metal such as steel, aluminum, or the like.

The first part and the second part may be formed as hollow bolts having respective shaft sections and flange sections, and the shaft section of the first part may be threaded in an opposite direction to the shaft section of the second part.

In an alternative configuration, the shaft section of the first part may be threaded in the same direction to the shaft section of the second part, and the third part may comprise a first threaded section engaging the shaft section of the first part and a second threaded section engaging the shaft section of the second part, the first threaded section being threaded in an opposite direction to the second threaded section.

In a further alternative configuration, the first part and/or the second part may be formed as a nut, and the third part may be formed as a hollow bolt having a pair of shaft sections extending from either end of a flange section, wherein a radially outer surface of at least one of said flange sections engages, via threads, the radially inner surface of said nut.

The threaded surfaces in such a configuration may be configured to achieve the linear motion of the first and/or second part upon a rotation of the third part. In some examples, a first anchor point may be formed by, e.g., the first part.

To promote the effective translation of the rotational movement of the third part into a linear motion of the first and/or second parts, it is preferable that the first and second part do not rotate relative to each other and/or the composite rod during rotation of the third part.

Hence, according to an example refinement of the presently disclosed tensioner device, the first part and the second part are configured to be rotationally fixed relative to each other during rotation of the third part.

One way to achieve this may be to configure the respective inner surfaces of the first part and the second part to engage the outer surface of the composite rod, e.g., by configuring an outer surface of the composite rod with a flattening or other profile, and configuring an inner surface of the first and second part with a corresponding flattening or other complementary profile.

An alternative or additional configuration of the first part and the second part to prevent relative rotation may be to rigidly connect these parts along the axis of the tensioner device. For example, the first and second part may be joined by guide pins or similar such components. This approach may advantageously negate a need to configure or adapt an outer surface of the composite rod.

The third part may be configured to be rotated by a tool. For example, the third part may comprise an engagement profile on the radially outer surface thereof, configured to be engaged by the tool. The tool may be a tommy bar or a hook spanner, and the engagement profile may thus be configured to receive such tools, or whatever tool is intended to rotate the third part. In a particular example, the engagement profile may comprise a plurality of indents spaced apart along the circumference of the third part.

It will be appreciated that the choice of tool and corresponding engagement profile may advantageously be selected for compactness such that the third part may be rotated effectively without requiring substantial free space therearound. In some examples, the third part may be rotated by hand or by a power tool, and grip onto the third part may be suitably achieved even without an engagement profile, e.g., via frictional and/or magnetic attachment.

It will be further appreciated that the torque required to rotate the third part may be dependent on the pitch of the threads engaged between the third part and the first and/or second parts (if such threads are used). That is, fine pitched threads may allow for a lesser linear motion of the first and/or second part, but with an increased ease of rotation of the third part, and vice versa.

The pitch of the thread can readily be converted into amount of extension of the first and/or second part, such as every 120° of rotation being 1 mm of extension. Accordingly, it can be ensured that the composite rod is precisely tensioned, not over- or undertensioned, and that different composite rods in a same structure are tensioned evenly, for example.

Structures that may benefit from the use of composite rods for reinforcement may include those which carry, e.g., high voltage equipment. Composite rods are not electrically conductive but, when tensioned, can provide a comparable tensile strength to metals.

Therefore, according to the invention, there is provided a structure for supporting a converter valve assembly, according to claim 1, and comprising a frame structure, a composite rod arranged to reinforce the frame structure, and the tensioner device substantially as described above, arranged on the composite rod to thereby tension the composite rod.

Converter valve assemblies may be installed into off-shore wind installations. Such installations may experience significant seismic activity, thus necessitating resilient standing structures for supporting the converter valve assemblies.

According to the structure described above, the first pushing surface and the second anchor point are fixed to the frame structure, e.g., forming a part of such a standing structure.

In an example, a bracket may at least partially surround the tensioner device, and may form the first pushing surface. It may be due to such a bracket that a limited space is available around the tensioning device.

### Brief Description of the Drawings

One or more embodiments of the present disclosure will be described, by way of example only, and with reference to the following figures, in which:
Figures 1A and 1B schematically show a tensioner device according to an embodiment of the present disclosure, in a retracted and extended state, respectively;
Figures 2A and 2B schematically show the tensioner device shown in figures 1A and 1B, installed around a composite rod, between a first anchor point and a first pushing surface;
Figure 3 shows a tensioner device according to another embodiment of the present disclosure;
Figure 4 shows a tensioner device according to yet another embodiment of the present disclosure;
Figures 5A and 5B show a perspective view of a tensioner device according to an example embodiment of the present disclosure;
Figure 5C shows the same tensioner device as that in figures 5A and 5B, in an exploded view;
Figures 6A to 6D show various views of the third part of the tensioner device as shown in figures 5A to 5C;
Figures 7A to 7E show various views of the first part and/or the second part of the tensioner device as shown in figures 5A to 5C;
Figure 8 shows a perspective view of a composite rod installed between two sections of a frame structure, having a tensioner device installed therearound, according to an example implementation of the present disclosure; and
Figure 9 shows a perspective view of the frame structure shown in figure 8, showing further surrounding components of the frame structure.

### Detailed Description

The present disclosure is described in the following by way of a number of illustrative examples. It will be appreciated that these examples are provided for illustration and explanation only and are not intended to be limiting on the scope of the present disclosure. Instead, the scope of the present disclosure is defined by the appended claims.

Furthermore, although embodiments be presented individually for the sake of focused discussion of particular features, it will be recognized that the present disclosure also encompasses combinations of the embodiments described herein, as long as such combinations fall within the wording of the appended claims.

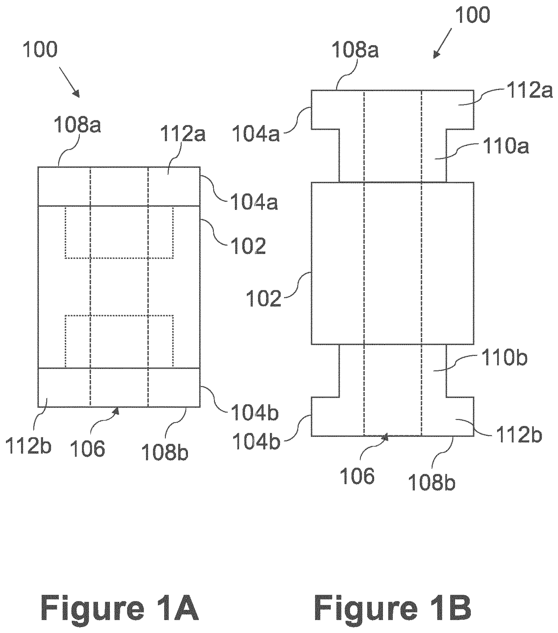

Figures 1A and 1B schematically show a tensioner device 100 according to an example embodiment of the present disclosure, in a retracted and extended state, respectively. The tensioner device 100 is configured to be arranged on a rod (not shown), and held in place on the rod by surrounding structures, nuts, bolts or similar means. The tensioner device 100 comprises three parts: a first part 104a, a second part 104b and a third part 102.

The first part 104a, formed as a hollow bolt 104a, comprises a shaft section 110a and a flange section 112a. The shaft section 110a is shown in figure 1B and is, in figure 1A, located radially within the third part 102. The second part 104b is similarly formed as a hollow bolt 104b, comprising a shaft section 110b and a flange section 112b. The first and second parts 104a, 104b are arranged on opposite sides of the third part 102, such that their respective shaft sections 110a, 110b are arranged towards the other shaft section and configured to be engaged by the third part 102.

The flange sections 112a, 112b protrude radially out from the shaft sections 110a, 110b and thereby create abutment surfaces 108a, 108b. In the extended state of the tensioner device 100, in use, the abutment surfaces 108a and 108b abut an anchor point and a pushing surface (not shown) respectively, thus creating the desired tension within the rod.

In figures 1A and 1B, the flange sections extend to the same width as the third part 102. For example, in an example embodiment where the tensioner device is cylindrically shaped, the outer radius of the third part 102 is substantially equal to the outer radius of the flange section 112a, 112b of the hollow bolt 104a, 104b. However, in other example embodiments, independent of the shape of the tensioner device, the flange section 112a, 112b may extend less than or more than the width of the third part 102, depending on how much contact surface is desired between the abutment surface 108a, 108b and the anchor point and/or pushing surface.

The third part 102, formed as a nut 102, is arranged between the first part 104a and the second part 104b. In the retracted state of the tensioner device, shown in figure 1A, the shaft section 110a, 110b of the first part 104a and the second part 104b is engaged by and retracts into the third part 102. As an example implementation of such an engagement, the inner radial surface of the nut 102 is threaded and configured to engage with threads on the outer radial surfaces of the hollow bolts 104a, 104b. The threads are not shown in figures 1A and 1B.

An opening 106 extends throughout the tensioner device to receive the rod, i.e., extending from an axially outer surface 108a of the first part 104a, to an axially outer surface 108b of the second part 104, and through the third part 102. The opening 106 is configured to receive a rod therethrough, so that the tensioner device 100 can be arranged radially around the rod.

In the extended state of the tensioner device 100, shown in figure 1B, relative to the retracted state shown in figure 1A, the first part 104a and the second part 104b have been moved linearly away from the third part 102 in opposite directions. In other words, the first and second parts 104a, 104b extend away from the third part 102. This linear movement may result from rotating the third part 102 in a first direction, and this rotation may be translated into the linear movement of the first part 104a and second part 104b, e.g., via the action of threads. Rotating the nut 102 in the opposite direction may thus result in the retraction of the hollow bolts 104a, 104b.

In an example, the nut 102 may be threaded along the axial length of its inner surface, and this threading may be in a single direction. The hollow bolts 104a, 104b may then have opposite threading to each other such that the first hollow bolt 104a is right-hand threaded and the second hollow bolt 104b is left-hand threaded, or vice versa. Therefore, a rotation of the nut 102 when engaging the hollow bolts 104a, 104b results in the mutual expansion away from or retraction into the nut 102.

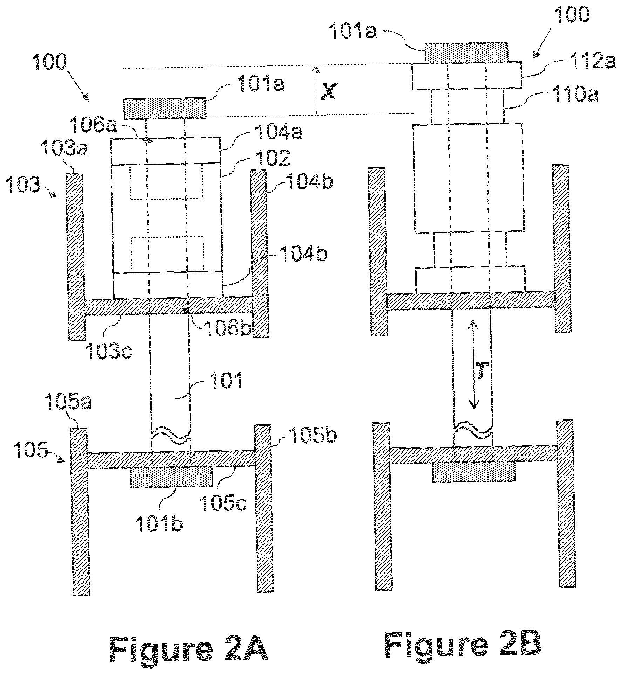

Figures 2A and 2B schematically show the tensioner device 100 shown in figures 1A and 1B installed around a composite rod 101, between a first anchor point 101a and a first pushing surface 103c. In these figures and others, components being referenced with a same numeral as components shown in and described in relation to, e.g., figure 1, may be the same or similar, at least in respect of function, to such components. Hence, such similarly numbered components may not be discussed again in detail.

The tensioner device 100, as described above, comprises a first hollow bolt 104a having a shaft section 110a and a flange section 112a. The first hollow bolt 104a is arranged at a first end of a nut 102 (i.e., the third part as described above). The shaft section 110a of the first hollow bolt 104a extends within the nut 102, such that the flange section 112a substantially abuts the first end of the nut 102 in the retracted state of the tensioner device 100, as shown in figure 2A.

At a second end of the nut 102, opposite to the first end, a second hollow bolt 104b (i.e., the second part as described above) is arranged. The second hollow bolt 104b is formed similarly to the first hollow bolt 104a, comprising a shaft section 110b extending within the nut 102 and a flange section 112b substantially abutting the second end of the nut 102 in the retracted state of the tensioner device 100. Although the hollow bolts 104a, 104b are shown as being substantially similar in this example, in some other examples, the first part 104a and the second part 104b may differ from each other at least in form.

The tensioner device 100 is arranged on a rod 101. In other words, the rod 101 extends through the opening 106 of the tensioner device 100. At each of the ends of the rod 101 a nut 101a, 101b is mounted. Thus, in this example, first and second anchor points 101a, 101b are formed by nuts threaded onto the rod 101. The rod 101 extends through two frame sections 103, 105, which may be parts of a larger structure which the rod 101 is being used to provide additional rigidity or support to.

In the illustrated example, the tensioner device 100 is arranged between the top nut 101a on the rod 101, acting as an anchor point on the rod, and the frame structure 103, acting as a first pushing surface.

In the retracted state of the tensioner device 101, as shown in figure 2A, the tensioner device may abut the frame structure 103 under the action of gravity but may not contact the anchor point 101a. In the extended state of the tensioner device 100, as shown in figure 2B, the tensioner device 100 extends and pushes upwards against the nut 101a, acting as a first anchor point, and pushes downwards against the frame structure 103, acting as a first pushing surface. This extension, and thus the pushing action, will cause a displacement X of the nut 101a. As the nut 101a is mounted to the rod 101, this displacement X will correspondingly extend the rod 101 and thus tension it, as an opposing end of the rod 101 is anchored via an abutment of a second anchor point 101b against a second pushing surface 105c.

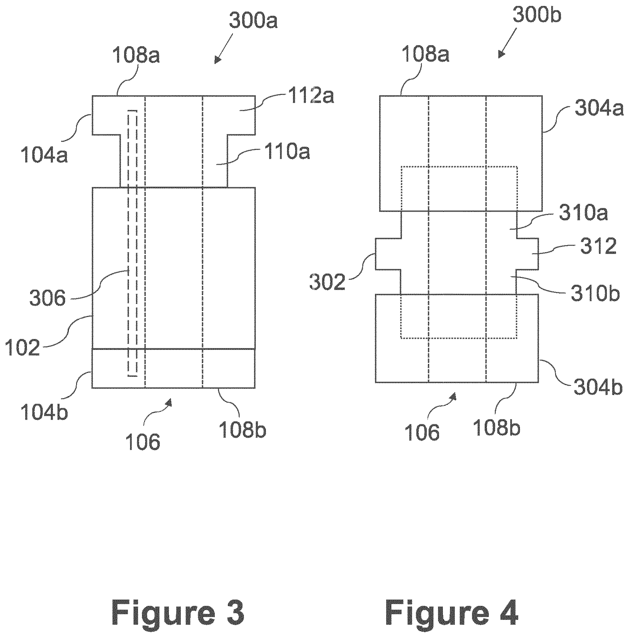

Figure 3 shows a tensioner device 300a according to another example embodiment of the present disclosure. The tensioner device 300a comprises a nut 102 similar to that shown in figures 1 and 2. The tensioner device 300a further comprises a hollow bolt 104a having a shaft section 110a and a flange section 112a, similar to that shown in figures 1 and 2. The flange section has a surface 108a for abutting, or in other words pushing against or applying pressure to an anchor point on a rod. The rod and anchor point are not depicted in figure 3.

The hollow bolt 104a is positioned at a first end of the nut 102 and arranged so that the shaft section 110a of the hollow bolt 104a extends within the nut 102 in the retracted state of the tensioner device 300a (not shown). In the extended state of the tensioner device 300a, as shown in figure 3, the shaft section 110a extends out of the nut 102.

On the opposite end of the nut 102, a second hollow bolt 104b is arranged. The second hollow bolt 104b, may be similarly formed as the first hollow bolt 104a, having a shaft section and a flange section. However, in this example embodiment, the hollow bolt 104a will extend from the nut 102 when rotating the nut 102, while the hollow bolt 104b will not extend away from the nut 102. In other words, the extension of the tensioner device 300a will only occur on one end of the nut. Both hollow bolts 104a, 104b will apply pressure to the respective anchor point or pushing surface.

Such an example embodiment may be configured such that the nut 102 engages the first hollow bolt 104a via threads but does not engage the second hollow bolt 104b. For example, the inner surface of the nut 102 and the outer surface of the second hollow bolt 104b may be configured to rotate smoothly and/or freely relative to each other, e.g., via a lubricated bearing. Hence, the nut 102 may still be rotated with ease even under tension as the lower surface thereof does not contact the first pushing surface or the first anchor point.

Similarly to previously described embodiments, an opening 106 extends from a first abutment surface 108a of the hollow bolt 110a through the nut 102 and the second hollow bolt 104b, such that the tensioner device 300a can be arranged on a rod.

According to the example shown in figure 3, the hollow bolt 104a and the second hollow bolt 104b are rigidly connected along an axis of the tensioner device 300a. This prevents the hollow bolts 104a, 104b from rotating with the nut 102, and instead provides for the ease of rotational movement of the nut 102, relative to the hollow bolts 104a, 104b, for translating into a linear movement of the hollow bolts 104a, 104b. The rigid connection may be implemented by, e.g., a locking pin 306, which extends between the hollow bolts 104a, 104b, and prevents a relative rotation thereof. Hence, the risk that torque applied to the nut 102 is translated into anything other than a linear motion of the hollow bolt 104a is reduced.

Figure 4 shows a tensioner device 300b according to another exemplary embodiment of the present disclosure. Figure 4 essentially shows an opposite arrangement to that of figures 1 to 3, in that nuts surround a dual-shafted bolt rather than bolts retracting into a nut. That is, in figure 4, a hollow bolt 302 comprises a flange section 312, and a shaft section 310a, 310b on each side of the flange section 312. Each of the shaft sections 310a, 310b is threaded on the outer radial surface, and each of the shaft sections 310a, 310b is threaded in opposite directions. For example, shaft section 310a comprises right-handed threads and thus run clockwise, while shaft section 310b comprises left-handed threads and thus run counterclockwise. The threads are not shown in figure 4.

Threaded on each of the shaft section 310a, 310b is a nut 304a, 304b. Extending through the nuts 304a, 304b and the hollow bolt 302 is an opening 106 configured to receive a rod.

By rotating the hollow bolt 302 in a first direction, the nuts 304a, 304b will linearly extend way from the flange section 312 of the hollow bolt 302. By rotating the hollow bolt 302 in a second direction the nuts 304a, 304b will linearly contract towards the flange section 312 of the hollow bolt 302.

In another example, the shaft sections 310a, 310b are threaded in a same direction, and the nuts 304a, 304b have opposite threading.

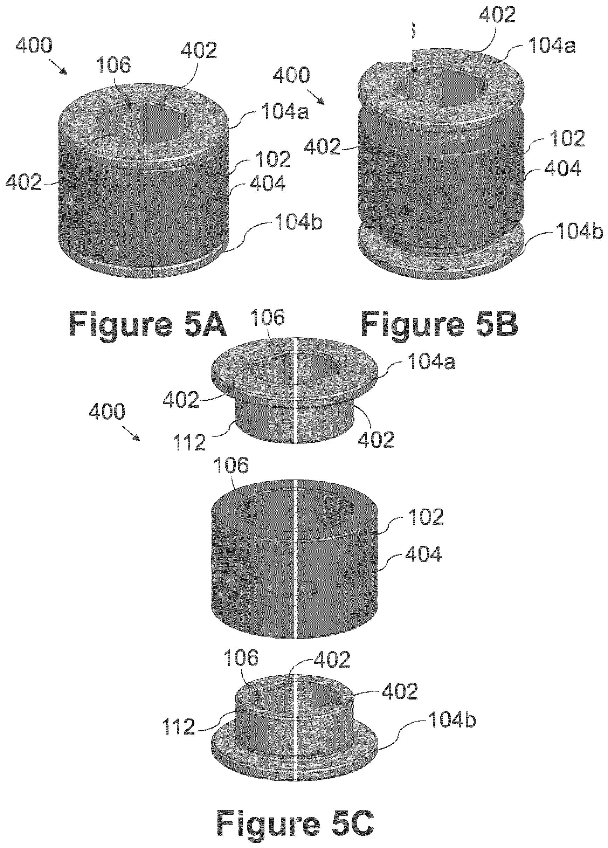

Figures 5A and 5B show a perspective view of a tensioner device 400 in a retracted and extended state, respectively, according to an example embodiment of the present disclosure, and figure 5C shows the same tensioner device as that in figures 5A and 5B, in an exploded view.

The tensioner device 400 comprises a nut 102 with a threaded inside. The threaded inside is not shown in figures 5A-C. The nut 102 further comprises engagement portions 404 configured to receive a tool, arranged around the circumference of the nut 102. The tool is used to rotate the nut 102, using engagements portions 404.

In figures 5A-C, the engagement portions 404 are formed as circular holes. However, it should the appreciated that the engagement portions 404 may be protrusions, or have any other shape not shown in figures 5A-C, for example star-shaped, square-shaped, depending on the chosen tool to be used. The engagement profile of the nut 102 may instead be a shaping of the nut 102, such as a hexagonal shaping for being engaged by a spanner. In preferred embodiments, the engagement portions 404 of the nut 102 are configured to be engaged by a hook spanner or a tommy bar, such that the nut 102 can be rotated without requiring a large clearance space therearound, as the tensioner device 400 may be installed on a rod in a confined space.

The tensioner device 400 further comprises a hollow bolt 104a arranged on a first side of the nut 102, and a hollow bolt 104b arranged on the opposite side of the nut 102. The hollow bolts 104a, 104b comprise a flange section 112 and a shaft section 110, as can be seen in figure 5C, and as discussed above.

According to the illustrated example, the inside surface of the hollow bolts 104a, 104b comprises two flat portions 402 arranged opposite each other, such that the hollow inside (or opening) 106 is not fully cylindrical or rotationally symmetrical. The flat portions 402 advantageously prevent relative rotational movement of the hollow bolts 104a, 104b around the rod and thus facilitates the translation of rotational movement of the nut 102 to a linear movement of the hollow bolts 104a, 104b. The flat portions 402 may be viewed as an alternative to the pin 306 shown in figure 3, or may be used in conjunction with such a pin 306.

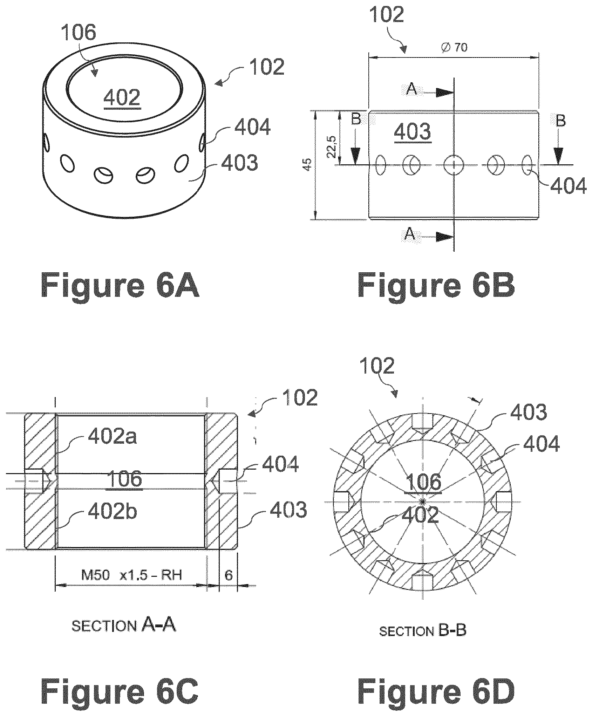

Figures 6A to 6D show various views of the third part 102 (i.e., the nut 102) of the tensioner device as shown in figures 5A to 5C.

Figure 6A shows the third part 102, also referenced as the nut 102. The nut 102 comprises an opening 106, for receiving a rod and the shaft sections of the first and second part, not shown in the figure. Around the outer surface 403 of the nut 402 are engagement portions 404, being evenly spaced out in this illustrated example. The engagement portions 404 are shown in these figures as being circular holes having a tapered point at their radially inner extreme, and are thereby configured to receive a tool for rotation of the nut 102. However, as discussed above, it should be understood that the engagement portions 404 may be shaped in any suitable way for engaging a tool.

Figure 6B shows the third part 102 and the engagement portions 404 spaced evenly along an axis B which is axially central, in this example.

Figure 6C shows a cross section of the third part 102 along axis A as shown in figure 6B. The opening 106 extends through the nut 102, and the nut 102 comprises threads on the radially inner surface 402. On a first part 402a of the inner radial surface 402 (the top part, if arranged as illustrated in figure 6C), the threads are threaded in a first direction and on a second part 402b of the inner radial surface 402 (the bottom part, if visualized as illustrated in figure 6C) the threads are threaded in a second direction, opposite the first direction. The threads may extend the full inner radius, or may be interrupted. In an alternative arrangement, the inner surface 402 may comprise threading only in a single direction throughout.

Figure 6D shows a top view of the nut 102 in cross section along axis B as shown in figure 6B. Extending through the nut 102 is an opening 106 comprising threads on the radially inner surface 402. Spaced around the radially outer surface of the nut 102 are engagement portions 404.

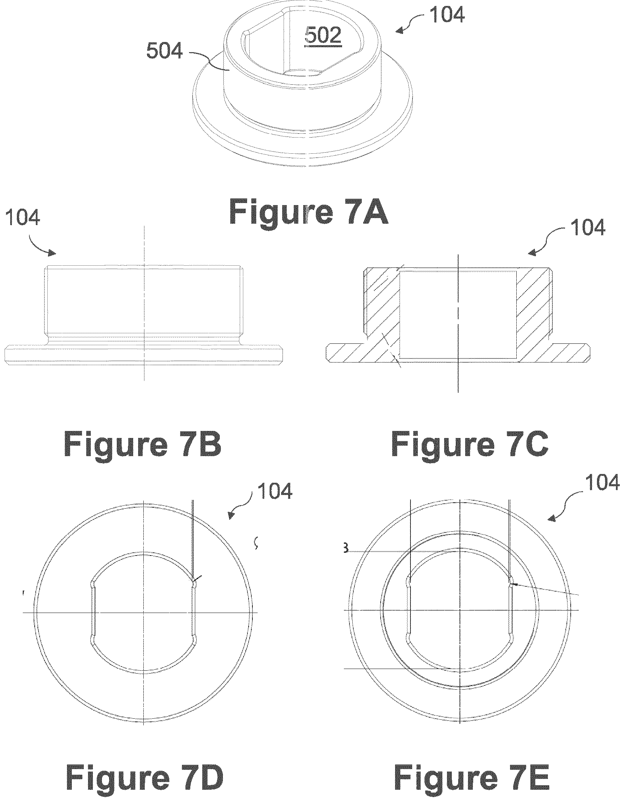

Figures 7A to 7E show various views of the first part and/or the second part 104 of the tensioner device 100 as shown in figures 5A to 5C. As discussed above, the first and second parts 104a, 104b may be substantially similar to each other, although inverted relative to each other when installed in use. Thus, only a part 104 is discussed, which could be the first part 104a or the second part 104b.

Figure 7A shows the part 104, formed as a hollow bolt 104, comprising a shaft section and a flange section (discussed in more detail above). Through the hollow bolt extends an opening 106. The radially inner surface of 502 the hollow bolt 104 comprises two flat portions, which prevent rotational movement of the hollow bolt 104, and thus facilitates the translation of the rotational movement of the nut to a linear movement of the hollow bolt 104, as discussed above. The radially outer surface 504 of the hollow bolt 104 comprises threads configured to engage with a third part, such as the nut shown in figures 6A to 6D.

Figure 7B shows a side view of the part 104. In this example, a bevel is provided at the interface between the flange section and the shaft section.

Figure 7C shows a cross section of the same view as 7B wherein the opening of the part 104 is shown.

Figure 7D shows a bottom view of the part 104, showing the flange section. The hollow opening has an inner surface 502 being partly circular with two flat portions opposite each other, although in alternative examples the portions may be arranged differently, and there may be only one flat portion or more flat portions.

Figure 7E shows a top view of the part 104, showing the shaft section, i.e., the opposite view of figure 7D. The flange section protrudes radially out from the shaft section. Also shown is the opening 106 and the flat portions of the inner radial surface.

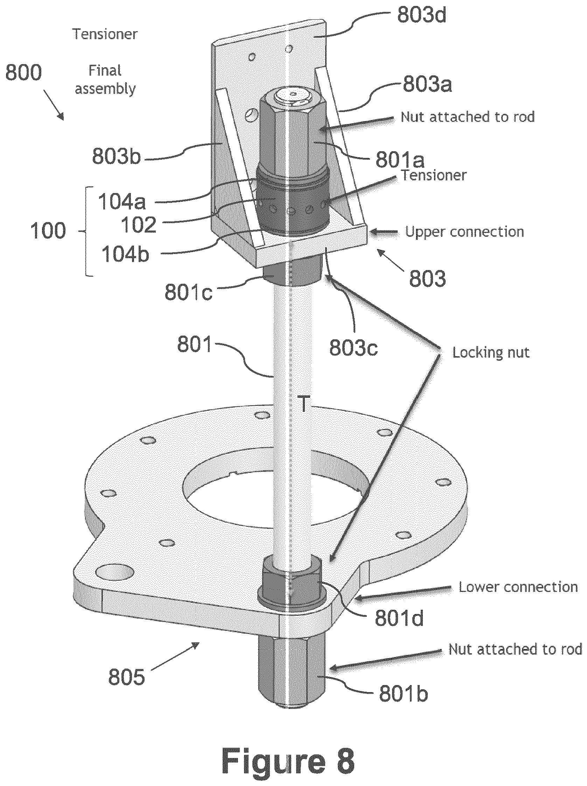

Figure 8 shows a perspective view of a composite rod 801 installed between two sections of a frame structure 803, 805, having a tensioner device installed therearound, according to an example implementation of the present disclosure. The frame structures 803, 805 may form part of a structure for a high power system.

A first frame structure 803 shaped as a bracket comprises a bottom plate 803a and a back plate 803d configured to be attached to a main frame structure. The frame structure 803 also has side plates for keeping the structure stable 803a, 803b, and thus limiting the space for using larger tools when tensioning the rod 801. In this example, the frame structure 803 is held in place in relation to the rod 801, after tensioning T thereof, by a locking nut 801c arranged on the rod 801 below the bottom plate 803c of the frame structure 803.

At each end of the rod 801 a nut 801a, 801b is arranged respectively, serving as anchor points. The two sections of the frame structure 803, 805 is locked in place on the rod 801 between each of the nuts 801b, 801a and additional locking nuts 801d, 801c.

Between the nut 801a and the bottom plate 803c of the frame structure 803 the tensioner device is arranged on the rod 801. The nut 801a thus creates a first anchor point for the first part 104a of the tensioner device 100 to abut. The bottom plate 803a of the frame structure 803 creates a pushing surface for the second part 104b of the tensioner device 100. By rotating the third part 102 of the tensioner device 100, the first 104a and second 104b part will extend away from the third part 102, pushing against the anchor point (the nut 801a) and the pushing surface (the bottom plate 803c of the frame structure 803). This extension, and consequently the pushing, will create an extension of the rod and thus tensioning T the rod 801. Thereafter, the locking nuts 801c, 801d may be tightened.

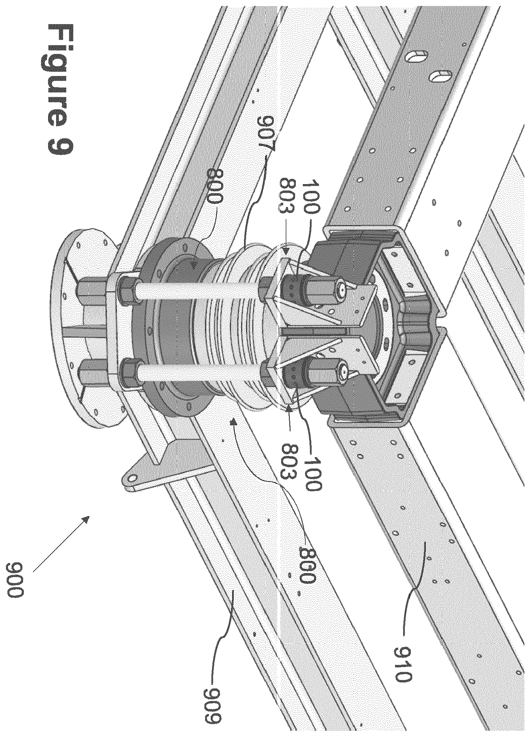

Figure 9 shows a perspective view of the frame structure shown in figure 8, showing further surrounding components of the frame structure of a high power system. Two rods and surrounding structures 800, as shown in figure 8, are provided for reinforcing the illustrated corner of the frame structure 900. The rods 800 are arranged between a first frame 909 and a second frame 910, and the tensioning of the rod 801 with the tensioner device 100, will thus tension the first frame 109 and the second frame 910 in relation to each other.

While the present disclosure is susceptible to various modifications and alternative forms, specific embodiments are shown and described above by way of example in relation to the drawings, with a view to clearly explaining the various advantageous aspects of the present disclosure. It should be understood, however, that the detailed description herein and the drawings attached hereto are not intended to limit the disclosure to the particular form disclosed.

## Claims

1. A structure for supporting a converter valve assembly, comprising:
a frame structure (103);
a composite rod (801) arranged to reinforce the frame structure, wherein the composite rod comprises a first anchor point and a second anchor point, and the second anchor point is fixed to the frame structure; and
a tensioner device, arranged on the composite rod between the first anchor point and a first pushing surface, wherein the first pushing surface is fixed to the frame structure, such that the tensioner device is arranged to thereby tension the composite rod by applying pressure between the first anchor point (101a) and the first pushing surface (103c), wherein the tensioner device comprises:
a first part (104a) for abutting the first anchor point (101a);
a second part (104b) for abutting the first pushing surface (103c); and
a third part (102) arranged between the first part (104a) and the second part (104b), and engaging at least one of the first part (104a) and the second part (104b) so as to translate a rotational motion of said third part (102) into a linear motion of said at least one of the first part (104a) and the second part (104b) away from the third part (102), to thereby apply the pressure between the first anchor point (101a) and the first pushing surface (103c).

2. The structure according to claim 1, wherein:
the first part (104a) and/or the second part (104b) is formed as a hollow bolt having a shaft section (110a, 110b) and a flange section (112a, 112b); and
the third part (102) is formed as a nut having a radially inner surface (402) engaging, via threads, the radially outer surface (504) of the shaft section (110a, 110b) of said hollow bolt.

3. The structure according to claim 2, wherein:
the first part (104a) and the second part (104b) are formed as hollow bolts having respective shaft sections (110a, 110b) and flange sections (112a, 112b); and
the shaft section (110a) of the first part (104a) is threaded in an opposite direction to the shaft section (110b) of the second part (104b).

4. The structure according to claim 2, wherein:
the first part (104a) and the second part (104b) are formed as hollow bolts having respective shaft sections (110a, 110b) and flange sections (112a, 112b);
the shaft section (110a) of the first part (104a) is threaded in the same direction to the shaft section (110b) of the second part (104b); and
the third part (102) comprises a first threaded section (402a) engaging the shaft section (110a) of the first part (104a) and a second threaded section (402b) engaging the shaft section (110b) of the second part (104b), the first threaded section (402a) being threaded in an opposite direction to the second threaded section (402b).

5. The structure according to claim 1, wherein:
the first part and/or the second part is formed as a nut; and
the third part is formed as a hollow bolt having a pair of shaft sections extending from either end of a flange section, wherein a radially outer surface of at least one of said shaft sections engages, via threads, the radially inner surface of said nut.

6. The structure according to any preceding claim, wherein:
the first part and the second part are configured to be rotationally fixed relative to each other during rotation of the third part.

7. The structure according to claim 6, wherein:
the respective inner surfaces of the first part and the second part are configured to engage the outer surface of the composite rod.

8. The structure according to claim 6, wherein:
the first part and the second part are rigidly connected along the axis of the tensioner device.

9. The structure according to any preceding claim, wherein:
the third part is configured to be rotated by a tool.

10. The structure according to claim 9, wherein:
the third part comprises an engagement profile (403) on the radially outer surface (404) thereof, configured to be engaged by the tool.

11. The structure according to any preceding claim, further comprising:
a bracket at least partially surrounding the tensioner device,
wherein the bracket forms the first pushing surface.

## Patentansprüche

1. Struktur zum Stützen einer Umrichterventilanordnung, die Folgendes umfasst:
eine Rahmenstruktur (103);
einen Verbundstab (801), der dazu angeordnet ist, die Rahmenstruktur zu verstärken,
wobei der Verbundstab einen ersten Verankerungspunkt und einen zweiten Verankerungspunkt umfasst und der zweite Verankerungspunkt an der Rahmenstruktur fixiert ist; und eine Spannvorrichtung, die an dem Verbundstab zwischen dem ersten Verankerungspunkt und einer ersten Druckfläche angeordnet ist, wobei die erste Druckfläche an der Rahmenstruktur derart fixiert ist, dass die Spannvorrichtung so angeordnet ist, dass sie dadurch den Verbundstab durch Aufbringen von Druck zwischen dem ersten Verankerungspunkt (101a) und der ersten Druckfläche (103c) spannt, wobei die Spannvorrichtung Folgendes umfasst:
einen ersten Teil (104a) zum Anliegen an dem ersten Verankerungspunkt (101a);
einen zweiten Teil (104b) zum Anliegen an der ersten Druckfläche (103c); und
einen dritten Teil (102), der zwischen dem ersten Teil (104a) und dem zweiten Teil (104b) angeordnet ist und mindestens einen des ersten Teils (104a) und des zweiten Teils (104b) in Eingriff nimmt, um eine Drehbewegung des dritten Teils (102) in eine lineare Bewegung des mindestens einen des ersten Teils (104a) und des zweiten Teils (104b) weg von dem dritten Teil (102) zu übersetzen, um dadurch den Druck zwischen dem ersten Verankerungspunkt (101a) und der ersten Druckfläche (103c) aufzubringen.

2. Struktur nach Anspruch 1, wobei:
der erste Teil (104a) und/oder der zweite Teil (104b) als ein Hohlbolzen mit einem Schaftabschnitt (110a, 110b) und einem Flanschabschnitt (112a, 112b) ausgebildet ist; und
der dritte Teil (102) als eine Mutter ausgebildet ist, die eine radial innere Fläche (402) aufweist, die über Gewinde die radial äußere Fläche (504) des Schaftabschnitts (110a, 110b) des Hohlbolzens in Eingriff nimmt.

3. Struktur nach Anspruch 2, wobei:
der erste Teil (104a) und der zweite Teil (104b) als Hohlbolzen mit jeweiligen Schaftabschnitten (110a, 110b) und Flanschabschnitten (112a, 112b) ausgebildet sind; und
der Schaftabschnitt (110a) des ersten Teils (104a) in einer zu dem Schaftabschnitt (110b) des zweiten Teils (104b) entgegengesetzten Richtung mit einem Gewinde versehen ist.

4. Struktur nach Anspruch 2, wobei:
der erste Teil (104a) und der zweite Teil (104b) als Hohlbolzen mit jeweiligen Schaftabschnitten (110a, 110b) und Flanschabschnitten (112a, 112b) ausgebildet sind;
der Schaftabschnitt (110a) des ersten Teils (104a) in der zu dem Schaftabschnitt (110b) des zweiten Teils (104b) gleichen Richtung mit einem Gewinde versehen ist; und
der dritte Teil (102) einen ersten Gewindeabschnitt (402a), der den Schaftabschnitt (110a) des ersten Teils (104a) in Eingriff nimmt, und einen zweiten Gewindeabschnitt (402b), der den Schaftabschnitt (110b) des zweiten Teils (104b) in Eingriff nimmt, umfasst, wobei der erste Gewindeabschnitt (402a) in einer zu dem zweiten Gewindeabschnitt (402b) entgegengesetzten Richtung mit einem Gewinde versehen ist.

5. Struktur nach Anspruch 1, wobei:
der erste Teil und/oder der zweite Teil als eine Mutter ausgebildet ist; und
der dritte Teil als ein Hohlbolzen ausgebildet ist, der ein Paar Schaftabschnitte aufweist, die sich von jedem Ende eines Flanschabschnitts erstrecken, wobei eine radial äußere Fläche mindestens eines der Schaftabschnitte über Gewinde die radial innere Fläche der Mutter in Eingriff nimmt.

6. Struktur nach einem der vorhergehenden Ansprüche, wobei:
der erste Teil und der zweite Teil so ausgelegt sind, dass sie während einer Drehung des dritten Teils relativ zueinander drehfest sind.

7. Struktur nach Anspruch 6, wobei:
die jeweiligen Innenflächen des ersten Teils und des zweiten Teils dazu ausgelegt sind, die äußere Fläche des Verbundstabs in Eingriff zu nehmen.

8. Struktur nach Anspruch 6, wobei:
der erste Teil und der zweite Teil entlang der Achse der Spannvorrichtung starr verbunden sind.

9. Struktur nach einem der vorhergehenden Ansprüche, wobei:
der dritte Teil dazu ausgelegt ist, durch ein Werkzeug gedreht zu werden.

10. Struktur nach Anspruch 9, wobei:
der dritte Teil ein Eingriffsprofil (403) auf der radial äußeren Fläche (404) davon umfasst, die dazu ausgelegt ist, durch das Werkzeug in Eingriff genommen zu werden.

11. Struktur nach einem der vorhergehenden Ansprüche, die ferner Folgendes umfasst:
eine Halterung, die die Spannvorrichtung zumindest teilweise umgibt;
wobei die Halterung die erste Druckfläche ausbildet.

## Revendications

1. Structure pour supporter un ensemble de soupapes de convertisseur, comprenant :
une structure de cadre (103) ;
une tige composite (801) agencée pour renforcer la structure de cadre,
dans laquelle la tige composite comprend un premier point d'ancrage et un second point d'ancrage, et le second point d'ancrage est fixé à la structure de cadre ; et
un dispositif tendeur, agencé sur la tige composite entre le premier point d'ancrage et une première surface de poussée, dans laquelle la première surface de poussée est fixée à la structure de cadre, de manière telle que le dispositif tendeur est agencé pour ainsi tendre la tige composite en appliquant une pression entre le premier point d'ancrage (101a) et la première surface de poussée (103c), dans laquelle le dispositif tendeur comprend :
une première partie (104a) destinée à jouxter le premier point d'ancrage (101a) ;
une deuxième partie (104b) destinée à jouxter la première surface de poussée (103c) ; et
une troisième partie (102) agencée entre la première partie (104a) et la deuxième partie (104b), et entrant en prise avec au moins une de la première partie (104a) et de la deuxième partie (104b) afin de traduire un mouvement de rotation de ladite troisième partie (102) en un mouvement linéaire de ladite au moins une de la première partie (104a) et de la deuxième partie (104b) en éloignement de la troisième partie (102), pour ainsi appliquer la pression entre le premier point d'ancrage (101a) et la première surface de poussée (103c).

2. Structure selon la revendication 1, dans laquelle :
la première partie (104a) et/ou la deuxième partie (104b) sont sous forme de boulon creux ayant une section corps (110a, 110b) et une section bride (112a, 112b) ; et
la troisième partie (102) est sous forme d'écrou ayant une surface radialement intérieure (402) entrant en prise, par l'intermédiaire de filets, avec la surface radialement extérieure (504) de la section corps (110a, 110b) dudit boulon creux.

3. Structure selon la revendication 2, dans laquelle :
la première partie (104a) et la deuxième partie (104b) sont sous forme de boulons creux ayant des sections corps (110a, 110b) et des section brides (112a, 112b) respectives ; et
la section corps (110a) de la première partie (104a) est filetée dans une direction opposée à celle de la section corps (110b) de la deuxième partie (104b).

4. Structure selon la revendication 2, dans laquelle :
la première partie (104a) et la deuxième partie (104b) sont sous forme de boulons creux ayant des sections corps (110a, 110b) et des section brides (112a, 112b) respectives ;
la section corps (110a) de la première partie (104a) est filetée dans la même direction que celle de la section corps (110b) de la deuxième partie (104b) ; et
la troisième partie (102) comprend une première section filetée (402a) entrant en prise avec la section corps (110a) de la première partie (104a) et une seconde section filetée (402b) entrant en prise avec la section corps (110b) de la deuxième partie (104b), la première section filetée (402a) étant filetée dans une direction opposée à celle de la seconde section filetée (402b).

5. Structure selon la revendication 1, dans laquelle :
la première partie et/ou la deuxième partie sont sous forme d'écrou ; et
la troisième partie est sous forme de boulon creux ayant une paire de sections corps s'étendant depuis l'une ou l'autre extrémité d'une section bride, dans laquelle une surface radialement extérieure d'au moins une desdites sections corps entre en prise, par l'intermédiaire de filets, avec la surface radialement intérieure dudit écrou.

6. Structure selon une quelconque revendication précédente, dans laquelle :
la première partie et la deuxième partie sont configurées pour être fixées en rotation l'une relativement à l'autre durant la rotation de la troisième partie.

7. Structure selon la revendication 6, dans laquelle :
les surfaces intérieures respectives de la première partie et de la deuxième partie sont configurées pour entrer en prise avec la surface extérieure de la tige composite.

8. Structure selon la revendication 6, dans laquelle :
la première partie et la deuxième partie sont raccordées rigidement le long de l'axe du dispositif tendeur.

9. Structure selon une quelconque revendication précédente, dans laquelle :
la troisième partie est configurée pour être mise en rotation par un outil.

10. Structure selon la revendication 9, dans laquelle :
la troisième partie comprend un profil d'entrée en prise (403) sur la surface radialement extérieure (404) de celle-ci, configuré pour qu'un outil entre en prise avec celui-ci.

11. Structure selon une quelconque revendication précédente, comprenant en outre :
un support entourant au moins partiellement le dispositif tendeur ;
dans laquelle le support forme la première surface de poussée.
